# EUROPEAN PATENT SPECIFICATION

(11) **EP 0 458 161 B1**
(45) Date of publication and mention of the grant of the patent: **13.08.1997**
(21) Application number: 91107719.6
(22) Date of filing: 13.05.1991
(51) Int. Cl.: B23K 35/363

(54) **Water-soluble soldering flux**
Wasserlöslisches Weichlötflussmittel
Flux pour le soudage tendre soluble dans l'eau

(30) Priority: 15.05.1990 US 523765; 31.10.1990 US 607200
(43) Date of publication of application: 27.11.1991
(73) Proprietor: Hughes Aircraft Company, Los Angeles, California 90045-0066 (US)
(72) Inventor: Turner, Raymond L., La Habra, California 90631 (US)
(74) Representative: Grünecker, Kinkeldey, Stockmair & Schwanhäusser Anwaltssozietät

(56) References cited:
- EP-A- 0 090 960
- DE-A- 2 052 713
- GB-A- 2 080 341
- US-A- 3 162 547
- US-A- 3 220 892
- PATENT ABSTRACTS OF JAPAN, vol. 11, no. 175 (M-596)[2622], 5th June 1987; & JP-A-62 6796 (TAIYO INK SEIZO) 13-01-1987
- SOVIET INVENTIONS ILLUSTRATED, week 8747, 2nd December 1987, abstract no. 333423, Derwent Publications Ltd, London, GB; & SU-A-1 303 341 (A.I. BULATOV) 15-04-1987

## Description

Most fluxes and defluxing chemicals used by industry to manufacture electronic circuits, such as military hardware, are either contributing to ozone depletion of the atmosphere or are considered by local environmental agencies, such as the Air Quality Management District in the Los Angeles basin, as environmental pollutants or health hazards. For example, it has been reported that if CFCs (chlorofluorohydrocarbons), which are used in vapor degreasing to clean soldered parts where a rosin flux is employed, are released to the atmosphere, they will remain there as an ozone depletant for nearly 100 years. Other chemicals such as e.g. rosin fluxes and alcohols pose health risks and disposal problems for industry.

Water-soluble fluxes could be the simple solution for this major problem. However, most water-soluble fluxes are formulated with harsh activators, such as hydrochloric acid and complex glycols, which create major cleaning and residue problems for the printed circuit board and the electrical circuitry thereon and which tend to severely corrode the metal being soldered or contaminate the dielectric, causing a tendency for electromigration. Other water-soluble fluxes are formulated with iso-propanol and/or plasticizers, which create disposal and health problems.

JP-A-62-6796 discloses a water-washable flux composition for soldering, said composition containing at least two kinds of different carboxylic acids.

EP-A-0090960 discloses a method for soldering heavy metals using a soldering flux. The flux, which is based on an organic acid (e.g. succinic acid), is solved in isopropyl alcohol.

US-A-3162547 is concerned with a deoxidizer used for cleaning aluminum and its alloys prior to spot welding.

SU-A-1303341 discloses a flux composition comprising citric acid, triethanolamine and ethanol.

What is desired is a method for soldering a metal using a simple, non-toxic, non-corrosive liquid soldering flux that produces solder joints of high metallic luster and excellent quality, regardless of the method of soldering (e.g. hand, wave or drag).

The present invention provides a method for soldering a metal comprising applying to a surface a soldering flux, heating said metal to a desired soldering temperature, and applying solder to said surface, characterized in that said soldering flux consists of (a) citric acid and (b) at least one non-toxic carrier selected from the group consisting of water, terpenes and mixtures thereof; while being free of other carboxylic acids.

The flux used in the invention eliminates harmful environmental emissions normally associated with rosin-based fluxes, flux thinner (such as iso-propanol), and associated defluxing solvents (such as CFCs). The flux used in the invention is environmentally safe, non-toxic, and easy to use. Soldering time is cut in half, and defluxing (cleaning) time is reduced from ten to fifteen minutes (required for rosin-based fluxes) to about three minutes. Soldered assemblies can be cleaned in deionized water, thus eliminating the high capital costs associated with vapor degreasing equipment. The resulting soldered joint exhibits high metallic luster and excellent electrical quality.

The flux used in the invention consists of (a) citric acid and (b) a specific non-toxic carrier as defined above.

The following description is directed to the use of an aqueous solution of citric acid as a solder flux in liquid wave soldering.

Without subscribing to any particular theory, it appears that the citric acid chelates the oxide, but not the basis metal. As a result, there is little or no corrosion of the basis metal by the flux used in the invention.

The concentration range of citric acid in water may range from 0.5 to 99.5 percent (by weight). A concentration of at least about 5 wt% provides noticeably improved soldering results, while concentrations above about 40 wt% provide no additional improvement, and accordingly, this range is preferred. A concentration of at least about 20 wt% ensures consistently improved soldering results, even for less-than-ideal soldering surfaces, and accordingly, the range of 20 to 40 wt% is most preferred.

The quality of water used and the grade of citric acid employed are not material in the practice of the invention, although for extremely sensitive electrical circuits, it may be desirable to employ distilled or deionized water and a fairly high grade of citric acid. The source of the citric acid is also immaterial, and may comprise, for example, commercially-produced powder or crystal or even fruit juice or fruit juice concentrate, such as e.g. juice from oranges, lemons, limes, grapefruits, pineapples or tomatoes. Finally, the flux may contain other components, such as impurities, whether accidental or deliberate, so long as such additives have no adverse effect on the soldering results.

While water is the preferred carrier, it may be desirable to replace some or all of the water carrier with a terpene. A preferred terpene consists of L-limonene.

Thickening agents may be added to the flux in order to include the flux inside cored solder. Examples of suitable thickening agents include corn starch, tinning oil, gelatin, emulsifiers, and polyvinyl compounds. Such thickening agents are added to provide a flux having the requisite viscosity, as is well-known in the art.

The flux may also be combined with particulate solder and appropriate agents to form a solder paste.

Additives may be added to the flux for specific purposes. For example, an odorant, such as wintergreen oil, spearmint oil, or peppermint oil, may be added to the flux to provide a pleasant odor for the user. Such an odorant is typically added in the amount of 1 to 30 ppm.

A colorant may be added for visual purposes; this enables the operator to see the flux, which is otherwise colorless. 1 to 30 ppm of at least one food coloring may be added in this regard.

Surfactants may be added to enhance the cleaning process. Non-ionic wetting agents, such as ethoxylated alcohol, available under the tradename Triton X-100 from Rohm & Haas (Los Angeles, CA), may be added up to about 10% of the flux.

The flux is most advantageously employed in the soldering of electrical connections of electronic components to printed circuit boards. Such printed circuit boards typically comprise copper-plated lines surrounding via openings, which are copper-plated followed by a tin-lead coating over the copper, in the PCB through which the leads of the components extend. The solder employed during component soldering is typically a tin-lead solder, and the flux used in the invention has been successfully used with 60-40, 63-37, and 96-4 tin-lead solders. In most applications, 63-37 tin-lead solder is employed.

The flux used in the invention may be applied by a variety of techniques. However, to minimize splattering, due to the presence of water, during wave soldering, a preferred method of applying the flux is by mist-spraying, using a fogging system. The mist-spraying dampens the board in such a manner as to avoid an excessive number of individual droplets of flux, thereby avoiding splattering during wave soldering. More particulars as to the mist-spraying technique and the apparatus used to implement it are given in US-A-5 145 531 ("Fluxing Apparatus and Method").

The flux used in the invention provides the following advantages:
1. It eliminates harmful environmental emissions normally associated with rosin-based fluxes, flux thinner (such as iso-propyl alcohol), and associated defluxing agents (such as 1,1,1-trichloroethane). Indeed, cleaning of the flux is simply done in warm or hot water. Thus, the flux is environmentally safe.
2. It provides soldering personnel with a non-toxic, extremely safe, and highly effective flux to use.
3. Its use cuts the actual soldering time by approximately 50%. This enables automated soldering, using liquid wave soldering, to proceed at a rate twice as fast as with rosin-based solders, thereby subjecting electronic components to the heat of the solder for a far shorter period of time.
4. Defluxing (cleaning) time is cut from ten to fifteen minutes per unit (in CFC degreaser) to about one minute (in heated water).
5. Wave soldered assemblies can be cleaned in deionized water, thus eliminating the high capital cost of vapor degreasing equipment. The recurring costs of solvents and the costs associated with redistillation are also eliminated.
6. Use of the flux eliminates the need for costly control of solvent usage and equipment permits required by local environmental agencies (such as AQMD in the Los Angeles basin).
7. Use of the flux significantly reduces waste disposal and waste management costs; the flux is biodegradable and water-soluble.
8. Use of the flux provides solder joints that evidence high metallic luster and excellent electrical quality.

The method of the invention is expected to find use in commercial liquid manual and automatic soldering operations, particularly in soldering electrical components in circuit boards.

### EXAMPLES

### Example 1. Flux Activation Test:

A flux activation test, comparing prior art fluxes (RMA, Alpha 857, Kester 2224) to the flux used in the invention (citric acid solution), was performed by applying various fluxes to copper panels (5.08 cm x 5.08 cm) (2 inch x 2 inch), then drying the flux at 110°C (230°F) for 1 hour. The fluxed specimens were then cleaned and evaluated. Table I lists the composition of the flux and its appearance. RMA refers to Kester 185 rosin mildly active; Alpha 857 and Kester 2224 are water-soluble fluxes. The concentration of citric acid used was 400 g of citric acid powder per liter of water. The flux used in the invention is a clear liquid.

**Table I**

| Flux Composition | Appearance |
|---|---|
| RMA, Kester 185 | no chemical reaction to copper |
| Alpha 857 | severe chemical reaction to copper (multi-colored etch) |
| Kester 2224 | severe chemical reaction to copper (multi-colored etch) |
| Citric Acid | no chemical reaction to copper |

The flux used in the invention was on a comparable level with RMA, whereas the two commercial brands of water-soluble fluxes appeared as aggressors to copper. It was clear from the test that the flux used in the invention is a unique flux and should not be placed in the category of commercial water-soluble fluxes.

Without subscribing to any particular theory, it appears that the flux used in the invention acts as a chelating agent, attacking oxides without attacking the basis metal.

### Example 2. Solder Spread Test:

A comparison spread test was conducted to determine if the solder spread using the flux used in the invention was comparable to that of rosin "RMA" flux. Solder wire 0.16 cm (0.062 inch) in diameter was formed into solder rings of 0.95 cm (3/8 inch) diameter and placed in the center of copper panels measuring 5.08 cm x 5.08 cm (2 inch x 2 inch). Three drops of flux were placed in the center of each ring. All panels were then vapor phase reflowed at the same time. The area of solder spread using the flux used in the invention was repeatedly found to be over twice that of the RMA flux. Moreover, the flux used in the invention evidenced a higher luster and better wetting of the substrate, compared to the RMA flux.

From the foregoing, it is clear that the flux used in the invention is far superior to the RMA flux. It should also be noted that the basis metal of the copper was not attacked by the RMA flux or by the flux used in the invention.

Thus, there has been disclosed the use of a non-toxic, non-corrosive liquid soldering flux, suitable for use in soldering electrical components.

## Claims

1. A method for soldering a metal comprising applying to a surface a soldering flux, heating said metal to a desired soldering temperature, and applying solder to said surface, characterized in that said soldering flux consists of (a) citric acid and (b) at least one non-toxic carrier selected from the group consisting of water, terpenes and mixtures thereof; while being free of other carboxylic acids.

2. The method of claim 1, wherein said terpene consists of L-limonene.

3. The method of claim 1, wherein said surface is copper or tinned copper and said solder is a tin-lead solder.

4. A method for soldering a metal comprising applying to a surface a soldering flux, heating said metal to a desired soldering temperature, and applying solder to said surface, characterized in that said soldering flux consists of 0.5 to 99.5 wt% of citric acid in water; while being free of other carboxylic acids.

5. The method of claim 4, wherein the concentration of citric acid is at least about 5 wt%.

6. The method of claim 5, wherein said concentration ranges from 20 to 40 wt%.

7. The method of claim 4, wherein said surface is copper or tinned copper and said solder is a tin-lead solder.

## Patentansprüche

1. Verfahren zum Löten eines Metalls, umfassend das Aufbringen eines Lötflußmittels auf einer Oberfläche des Metalls, das Erwärmen des Metalls auf eine gewünschte Löttemperatur und das Aufbringen eines Lotes auf der Oberfläche, dadurch gekennzeichnet, daß das Lötflußmittel aus (a) Citronensäure und (b) mindestens einem ungiftigen Trägermaterial besteht, ausgewählt aus der Gruppe, bestehend aus Wasser, Terpenen und Gemischen davon; wobei das Lötflußmittel keine anderen Carbonsäuren enthält.

2. Verfahren nach Anspruch 1, worin das Terpen aus L-Limonen besteht.

3. Verfahren nach Anspruch 1, worin die Oberfläche Kupfer oder verzinntes Kupfer ist und das Lot ist ein Zinn-Blei-Lot.

4. Verfahren zum Löten eines Metalls, umfassend das Aufbringen eines Lötflußmittels auf einer Oberfläche des Metalls, das Erwärmen des Metalls auf eine gewünschte Löttemperatur und das Aufbringen eines Lotes auf der Oberfläche, dadurch gekennzeichnet, daß das Lötflußmittel aus einer Lösung von 0,5 bis 99,5 Gew.-% Citronensäure in Wasser besteht; wobei das Lötflußmittel keine anderen Carbonsäuren enthält.

5. Verfahren nach Anspruch 4, worin die Konzentration an Citronensäure mindestens etwa 5 Gew.-% beträgt.

6. Verfahren nach Anspruch 5, worin die Konzentration im Bereich von 20 bis 40 Gew.-% liegt.

7. Verfahren nach Anspruch 4, worin die Oberfläche Kupfer oder verzinntes Kupfer ist und das Lot ist ein Zinn-Blei-Lot.

## Revendications

1. Procédé de soudage d'un métal, comprenant l'application d'un flux de soudage sur une surface, le chauffage dudit métal à une température désirée pour le soudage et l'application d'une soudure sur ladite surface, caractérisé en ce que ledit flux de soudage est constitué (a) d'acide citrique et (b) d'au moins un support non toxique choisi dans l'ensemble constitué par l'eau, les terpènes et des mélanges de ceux-ci, tout en étant dépourvu d'autres acides carboxyliques.

2. Procédé selon la revendication 1, dans lequel ledit terpène est constitué de L-limonène.

3. Procédé selon la revendication 1, dans lequel ladite surface est formée de cuivre ou de cuivre étamé, et ladite soudure est une soudure d'étain-plomb.

4. Procédé de soudage d'un métal, comprenant l'application d'un flux de soudage sur une surface, le chauffage dudit métal à une température désirée pour le soudage et l'application d'une soudure sur ladite surface, caractérisé en ce que ledit flux de soudage est constitué de 0,5 à 99,5 % en poids d'acide citrique dans de l'eau, tout en étant dépourvu d'autres acides carboxyliques.

5. Procédé selon la revendication 4, dans lequel la concentration d'acide citrique est d'au moins environ 5 % en poids.

6. Procédé selon la revendication 5, dans lequel ladite concentration est comprise entre 20 et 40 % en poids.

7. Procédé selon la revendication 4, dans lequel ladite surface est formée de cuivre ou de cuivre étamé, et ladite soudure est une soudure d'étain-plomb.
